Europäisches Patentamt

(19) European Patent Office

Office européen des brevets

(11) Publication number: **0 210 749**
B1

# (12) EUROPEAN PATENT SPECIFICATION

(45) Date of publication of the patent specification:
20.12.89

(51) Int. Cl.⁴: **F16D 65/56**, F16D 55/224

(21) Application number: **86304895.5**

(22) Date of filing: **25.06.86**

(54) Brake actuators.

(30) Priority: **03.07.85 GB 8516844**

(43) Date of publication of application:
**04.02.87 Bulletin 87/6**

(45) Publication of the grant of the patent:
**20.12.89 Bulletin 89/51**

(84) Designated Contracting States:
**DE FR GB IT**

(56) References cited:
**DE-A- 2 334 154
DE-A- 2 724 129
FR-A- 1 428 249
GB-A- 1 258 306
GB-A- 1 355 960
GB-A- 1 451 327
GB-A- 1 494 961**

(73) Proprietor: **AUTOMOTIVE PRODUCTS PUBLIC LIMITED COMPANY, Tachbrook Road, Leamington Spa Warwickshire CV31 3ER(GB)**

(72) Inventor: **Haines, William Ernest, 39 St. Mary's Close, Southam Warwickshire(GB)**

(74) Representative: **Cundy, Anthony Brian et al, Anthony Cundy & Company 384 Station Road Dorridge, Solihull West Midlands B93 8ES(GB)**

ACTORUM AG

## Description

It is known for example from GB-A 1 355 960 and DE-A 2 724 129 to provide an actuator for a brake in which a friction member is moved into engagement with a rotatable element by a piston to apply the brake and in which an adjuster mechanism is provided to compensate for wear of the friction member. It is usual in such a mechanism to provode a limited amount of free travel in the adjuster mechanism to allow the piston to move a distance sufficient to apply the brake without adjustement occuring. The provision of a limited amount of free travel prevents the actuator from being over-adjusted which would ultimately result in the brake being applied continuously. It is a problem with such actuators that to provide the necessary amount of free travel the components of the adjuster mechanism must be manufactured very accurately which is not only more time consuming but is also more expensive.

DE-A 2 724 129 also discloses external means for manual control of the adjuster mechanism. Said means may be used for initial adjustment of the brake or for de-adjustment of the mechanism to permit replacement of the brake pads.

It is an object of this invention to provide an actuator in which the adjuster mechanism can be manufactured in a more cost effective manner.

According to one aspect of the invention an actuator for a brake by means of which at least one friction member may be moved into engagement with a rotatable element includes an actuator body defining a cylinder bore, an end wall closing one end of the cylinder bore and an actuator member slidably sealed within the cylinder bore thereby closing the other end to define a fluid tight working chamber therebetween, an inlet port being provided to said working chamber by which fluid under pressure may be introduced into the working chamber to move the actuator member away from the end wall to apply the brake; an adjuster mechanism including an adjustable abutment means acting between the actuator member and the end wall to limit return movement of the actuator member, said adjuster mechanism also including free travel means operative to allow a limited free travel of the actuator member before adjustment of the position of the abutment means commences to compensate for wear of the or each friction member characterised in that adjustable setting means operable after final assembly of the actuator, is provided to set said limited free travel of the actuator member to a predetermined value, so that tolerance variations in the various components of the adjuster mechanism may be accomodated.

The invention may be applied to brake actuators which are adapted to apply the brake by fluid pressure alone. However, preferably the brake actuators are also provided with mechanical actuation means which acts through the adjuster mechanism to move the actuator member away from the end wall to apply the brake.

The invention will now be described by way of example only with reference to the accompanying drawings of which:

Figure I is a cross section through a disc brake including a first example of an actuator according to the invention;

Figure 2 is an enlarged cross section through the actuator shown in Figure I;

Figure 3 is a section on the line III-III in Figure 2;

Figure 4 is an end view of a second example of an actuator according to the invention;

Figure 5 is a cross section on the line V-V in Figure 4;

Figure 6 is an end view similar to that of Figure 4 but showing a modification to the actuator shown in Figures 4 and 5;

Figure 7 is a cross section on the line VII-VII in Figure 6; and

Figure 8 ia a cross section through a third example of an actuator according to the invention.

With reference to Figures I to 3 there is shown a pair of friction members in the form of brake pads IIA and IIB for engagement with a rotatable element in the form of a brake disc I2. The actuator has a body I3 which defines a cylinder bore I4 closed at one end by an end wall I5 and at the other end by an actuator member in the form of a piston I6 to form a fluid tight working chamber I8 therebetween. The piston I6 is movable in a first mode of operation from the end wall I5 by fluid pressure in the working chamber I8 to apply the brake. The piston I6 is sealed to the cylinder bore I4 by a pressure seal 85. The fluid pressure is admitted to the working chamber I8 through an inlet port I7.

An adjuster mechanism 20 is provided to alter the fall back or rest position of the piston I6. The adjuster mechanism 20 includes an adjustable abutment means to limit return travel of the piston I6 and free travel means operative to allow a limited free travel of the piston I6 under the influence of fluid pressure before adjustment of the position of the abutment means commences. The adjustable abutment means comprises an extendable strut having two engaged screw threaded adjuster parts one of which is a screw member 22 and the other of which is a nut member 23.

The nut member 23 has a grooved frusto-conical end surface for co-operation with a frusto-conical surface 25 in the bore of the piston I6 to provide a cone clutch means between the nut member 23 and the piston I6. The two frusto-conical surfaces 24 and 25 are biassed into engagement by a coil compression spring 26 acting between a washer 27 held in the bore of the piston I6 and a washer 28 located on the nut member 23. The washer 28 reacts against the piston I6 through a low friction washer 29 interposed between itself and a shoulder 30 on the nut member 23.

The screw member 22 has a screw threaded shank 3I and a head 32. The head 32 is in the form of a tongue having two parallel flat faces 34 spaced apart and two part cylindrical faces I9. The threaded shank 3I is engaged with the nut member 23 such that a limited axial clearance is present between the co-operating threads to provide said free travel means.

The head 32 of the screw member 22 co-operates with a setting means 35, the setting means being operable after final assembly of the actuator to alter the amount of free travel of the piston l6 available before adjustment commences. The setting means 35 is interposed between the adjuster mechanism 20 and the actuator body l3 and includes an internally threaded sleeve 36 and a threaded plunger 37 threadably engaged in the bore of the sleeve 36. The plunger 37 has a part spherical end face 38 for abutment against an end face 33 of the head 32 of the screw member 22, and a slotted end face 39 for co-operation with the blade of a screwdriver (not shown) used to adjust the axial position of the plunger 37 relative to the sleeve 36. The sleeve 36 has a tubular body portion 43 supported by the end wall l5 and a transverse slot 40 into which the head 32 of the screw member 22 is engaged. The head 32 has a pair of circumferentially directed grooves 4l in it, one in each of the part cylindrical faces l9. The sleeve 36 has a pair of circumferential grooves 42 in it the ends of each of the grooves 42 being separated by the transverse slot 40.

The grooves 4l and 42 are so arranged that when the head 32 is engaged in the transverse slot 40 they form a substantially continuous circumferential groove into which a retaining member in the form of a snap ring or circlip 44 is fitted to axially connect the sleeve 36 to the screw member 22. The grooves 42 in the sleeve 36 are wider than the circlip 44 to allow a limited axial movement of the screw member 22 relative to the sleeve 36. The axial clearance between the circlip 44 and the grooves 42 is at least as great as the required free travel in the adjuster mechanism 20. Alternatively grooves 4l in the screw member 22, or both sets of grooves 4l and 42 may be made wider than the circlip 44 in order to provide the necessary axial clearance.

The tubular body portion 43 is splined at its outer end to receive a lever 46 used in a second mode of operation to mechanically apply the brake. The sleeve 36 is free to rotate under the influence of the lever 46 but is allowed only a limited axial movement. The axial movement of the sleeve 36 is limited in one direction by a circlip 48 engaged with a groove in the tubular body portion 43 and the other direction by a radially outwardly extending flange 49 formed as an integral part of the sleeve 36. To reduce friction between the flange 49 and the end wall l5 a low friction washer 50 is interposed therebetween.

In order to apply the brake in its first or primary mode of operation fluid pressure is admitted to the working chamber l8 through the inlet port l7, the fluid pressure displacing the piston l6 away from the end wall l5 towards the brake disc l2. The piston l6 thrusts against the brake pad llA causing it to frictionally engage the brake disc l2. Simultaneously, the reaction force on the end wall l5 urges the actuator body l3 in the other direction so that the other brake pad llB is also brought into frictional engagement with the brake disc l2.

To apply the brake in a secondary or ancillary mode the lever 46 is moved by a cable or actuator (not shown), this causes the sleeve 36 to be rotated relative to the actuator body l3. The rotation of the sleeve 36 rotates the screw member 22 as the head 32 of the screw member 22 is engaged in the transverse slot 40. Rotation of the screw member 22 relative to the nut member 23 which is prevented from rotating by engagement of frusto-conical surfaces 24 and 25, moves the nut 23 away from the end wall l5 taking the piston l6 with it. The piston l6 thrusts against the brake pad llA causing it to frictionally engage the brake disc l2, simultaneously, the reaction force is transferred from the flange 49 through the low friction washer 50 to the end wall l5 urging the actuator body l3 in the other direction so that the other brake pad llB is brought into frictional engagement with the brake disc l2.

Provided that contact is maintained between the nut member 23 and the piston l6 through the frusto-conical surfaces 24 and 25 no adjustment of the actuator can occur. If however, the piston l6 moves under the influence of fluid pressure a distance greater than the combined free travel between the nut member 23 and the screw member 22 and between the circlip 44 and the pair of grooves 42 the nut member 23 can no longer move with the piston l6 and the frusto-conical surfaces 24 and 25 become disengaged. As soon as the frusto-conical surfaces 24 and 25 become disengaged the nut member 23 is free to rotate on the screw member 22 under the influence of the coil compression spring 26 until contact between the two frusto-conical surfaces 24 and 25 is restored.

If the fluid pressure is now reduced towards zero the piston l6 will retract under the influence of the seal 85 towards the end wall l5 until the free travel is restored in the actuator mechanism 20 and between the circlip 44 and the pair of grooves 42. The new rest position of the piston l6 will be further away from the end wall l5 by a distance equal to the axial displacement of the nut member 23 during its rotation. No adjustment of the actuator can occur during mechanical actuation as it is not possible for the piston l6 to separate from the nut member 23.

In order to set the total free travel to the distance required the following method is used.

The actuator is fully assembled as shown in Figure l but with the brake disc l2 and the brake pads llA and llB replaced with a spacer block (not shown) and with the plunger 37 screwed back into the sleeve 36 and the bolt retaining the lever 46 removed. The lever 46 is positioned in its normal rest position and the piston l6 is moved into contact with a stop in the form of a spacer block by admitting fluid pressure to the working chamber l8. The distance moved by the piston l6 must be sufficient to remove any free play in the adjuster mechanism and between the circlip 44 and the pair of grooves 42. The lever 46 is now moved a distance that will produce an axial displacement of the piston l6 equal to the total free travel required in the actuator.

The piston l6 will not be further moved by this action as the free travel available is arranged to be greater than the total free travel required.

The setting means 35 is then used to remove any excess free travel in the following manner.

A screwdriver (not shown) or suitable tool is engaged with the slotted end face 39 of the plunger 37 and used to rotate the plunger 37 in the direction for engagement with the face 33 of the screw member 22. The plunger 37 is then rotated until all of the free travel is removed from the adjuster mechanism 20 and between the circlip 44 and the pair of grooves 42. The lever 46 is now returned to its rest positon thereby introducing a free travel into the actuator. When the fluid pressure is removed from the working chamber 18, the removal of the fluid pressure allows the piston 16 to release its grip upon the spacer block which can be removed. The actuator is now set for use and is ready for fitment to a vehicle.

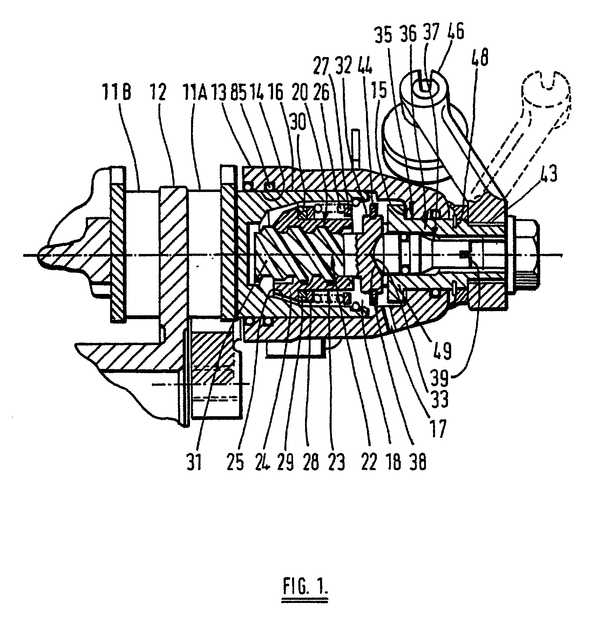

A further problem that can exist with auto-adjusted actuators is that when the pads 11A, 11B are worn it is difficult to de-adjust the actuator which is necessary before new brake pads 11A, 11B can be fitted. To overcome this problem the lever 46 is cranked enabling it to be removed and reversed. With the lever 46 in its reversed position (shown ghosted in Figure 1) it can be used to de-adjust the actuator without it fouling the cable mechanism normally used to mechanically operate the actuator.

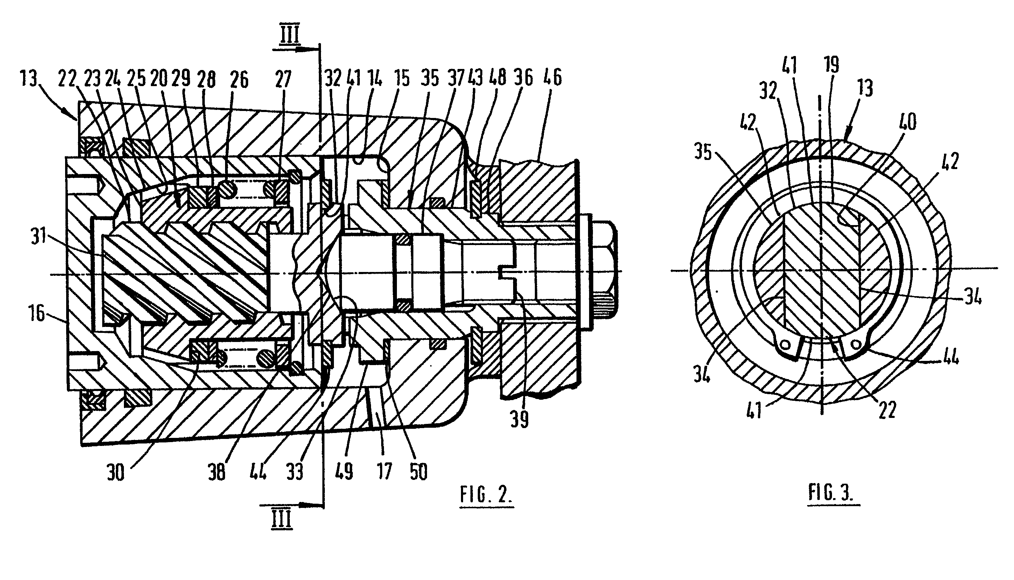

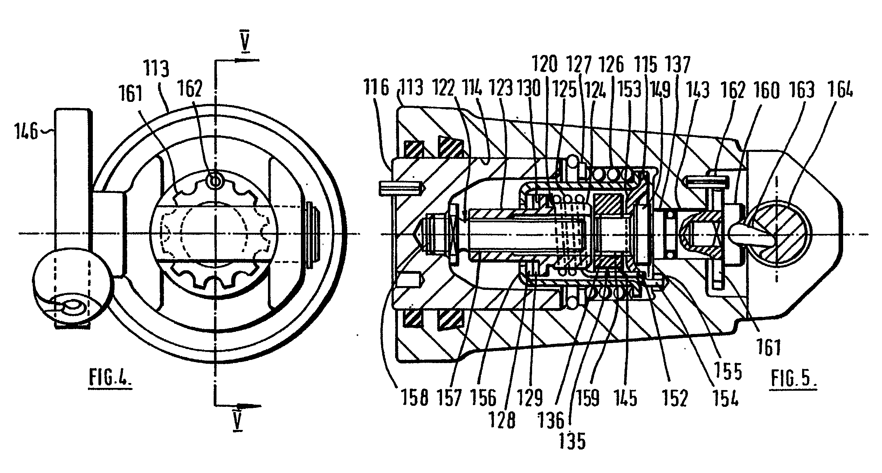

In the first modification of the invention shown in Figures 4 and 5 parts similar to those described with respect to Figures 1 - 3 have the same reference numerals with the addition of 100.

The actuator has a body 113 which defines a cylinder bore 114 closed at one end by an end wall 115 and at the other end by a piston 116.

An adjuster mechanism 120 is provided to alter the rest position of the piston 116. The adjuster mechanism 120 includes an adjustable abutment means in the form of an extendable strut and free travel means to allow a limited free travel of the piston 116 under the influence of fluid pressure before adjustment of the rest position commences. The adjustable strut includes two parts threadably engaged with one another, a screw member 122 and a nut member 123.

The nut member 123 has a cylindrical portion 124 to support a coil spring 125 and a shoulder 130. The coil spring 125 is prevented from rotation by an arm 152 formed integrally therewith that extends parallel to the cylinder bore 114 to engage an anti-rotation plate 153. The anti-rotation plate 153 is prevented from rotation by a tab 154 which engages with a recess 155 in the end wall 115. The nut member 123 is biassed towards the end wall 115 by a compression spring 126 acting between an abutment washer 127 held in the bore 114 and the rim of a top hat shaped cage 156. The cage 156 transfers the thrust of the compression spring 126 to the shoulder 130 through a pair of washers 128 and 129. Both of the washers 128 and 129 are made from a low friction material to aid rotation of the nut member 123 relative to the cage 156.

The coil spring 125 and the cylindrical portion 124 form a spring clutch between the nut member 123 and the body 113.

The spring clutch allows rotation of the nut member 123 in one direction relative to the screw member 122 to permit extension of the strut 121 but is operative to prevent rotation in the other direction.

The screw member 122 has a screw threaded shank 157 for engagement with the nut member 123 and a screw threaded end portion 158 to connect the screw member 122 to the piston 116.

The actuator further includes a setting means 135 to alter the amount of free travel in the actuator.

The setting means 135 includes an internally threaded sleeve 136 and a threaded plunger 137 in threaded engagement with the sleeve 136.

The sleeve 136 has an axial groove 145 in its outer surface into which the arm 152 of the axial spring 125 locates to prevent rotation of the sleeve 136.

The plunger 137 has a threaded portion 159 for engagement with the sleeve 136, a flange 149 and a cylindrical body portion 143. The cylindrical body portion 143 has a bore therein into which an end support 160 is fitted and has a star wheel 161 press fitted to aid rotation of the plunger 137. To prevent unwanted rotation of the plunger 137 a rollpin 162 is press fitted into an aperture in the body 113 and engages with the star wheel 161. The end support 160 has a slot in it to accept the pushrod 163 of a mechanical actuator.

To apply the brake in a first or primary mode of operation fluid pressure is admitted to the bore 114 causing the piston 116 to be displaced away from the end wall 115 against one of the brake pads (not shown) and causes the body 113 to react against the other pad as previously described.

To apply the brake in a secondary or ancillary mode a lever 146 is rotated by operator controlled means (not shown). Rotation of the lever 146 causes a cam 169 to be rotated and moves the pushrod 163 against the end support 160. The reaction against the end support 160 moves the plunger 137 axially into contact with the nut member 123. The nut member 123 which is locked to the screw member 122 by the coil spring 125 and the movement of the nut member 123 is therefore transferred to the piston 116 through the screw member 122 causing the piston 116 to be moved away from the end wall 115 to apply the brake.

In order to set the total free travel required in the adjuster the procedure is essentially as described with reference to Figures 1 to 3 the differences merely reflecting the modification to the structure of the actuator. The additional free play for example is provided between the nut member 123 and the sleeve 136 and this is adjusted by rotation of the plunger 137 by means of the star wheel 161. The essential steps of displacing the piston 116 against a spacer block by admitting fluid pressure moving the lever 146 a predetermined amount and removing any excess free play by adjustment of the setting means 135 remain the same.

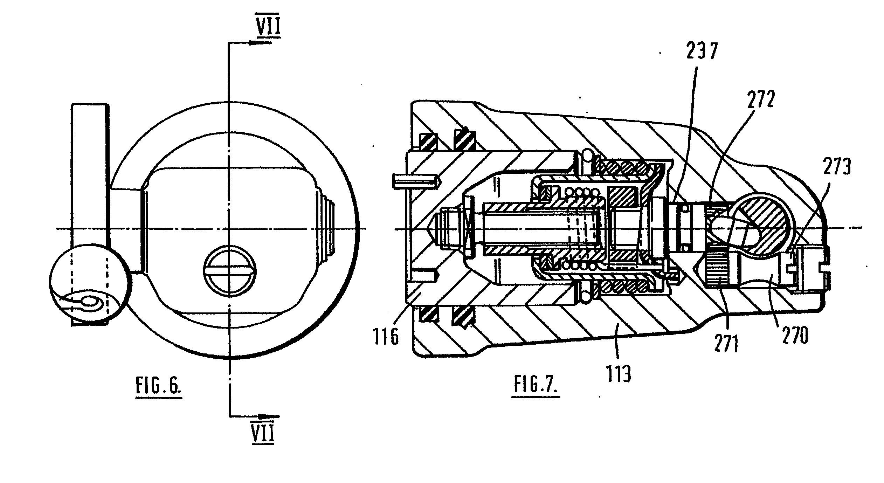

The actuator shown in Figures 6 and 7 is identical to that shown in Figures 4 and 5 in all respects except for the construction of the means for adjusting the setting means.

In replacement for the star wheel 161 and rollpin 162 there is provided an adjuster shaft 270 having a number of gear teeth 271 at one end in engagement with a corresponding number of gear teeth 272 on the plunger 237. The adjuster shaft 270 has a slot 273 in its other end into which a screwdriver may be fitted to effect alteration of the free travel available in the adjuster mechanism. The operation and setting of the actuator is in all other respects as described with respect to the modification of Figures 4 and 5.

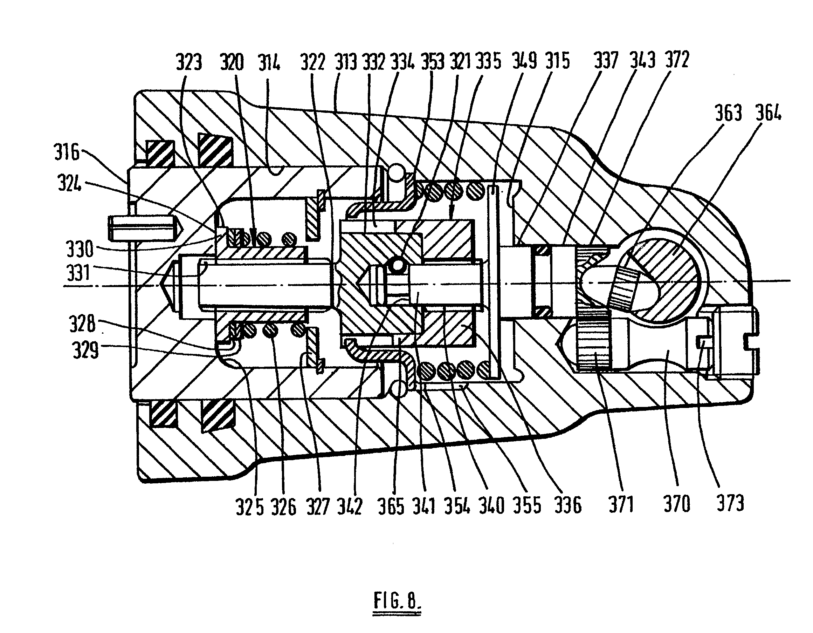

In the third modification of the invention shown in Figure 8 there is shown an actuator having a body 313 which defines a cylinder bore 314 closed at one end by an end wall 315 and at the other end by a piston 316. The piston 316 is movable in a first mode of operation away from the end wall 315 by fluid pressure admitted to the cylinder bore 314 through an inlet port to apply the brake. An adjuster mechanism 320 is provided to alter the fall back or rest position of the piston 316. The adjuster mechanism 320 includes an adjustable abutment means to limit return travel of the piston 316 and free travel means operative to allow a limited free travel of the piston 316 under the influence of fluid pressure before adjustment commences.

The adjustable abutment means comprises a screw member 322 and a nut member 323 which are in threaded engagement to form an extendable strut. The nut member 323 has an annular end surface 324 for co-operation with an annular surface 325 in the bore of the piston 316 the surfaces 324 and 325 being biassed into engagement by a compression spring 326. The spring 326 acts between a washer 327 held in the bore of the piston 316 and a pair of washers 328 and 329 interposed between the spring 326 and in shoulder 330 on the nut member 323. The two surfaces 324 and 325 form a clutched drive between the piston 316 and the nut member 323.

The screw member 322 has a threaded shank 331 and a head 332. The head 332 has a number of axially extending slots 334 and is cross-drilled to accept a rollpin or locking pin 321 used to axially lock against separation the screw member 322 to a plunger 337 forming part of a setting means 335. The setting means 335 includes not only the plunger 337 but also a sleeve 336 and means to rotate the plunger 337 relative to the sleeve 336.

The plunger 337 has a threaded stem 340 for engagement with the sleeve 336, a flange 349 and a cylindrical body portion 343 supported in a through bore in the end wall 315. The threaded stem 340 has an end portion 341 in which there is a circumferential groove 342 for co-operation with clearance with the locking pin 321 to provide for limited axial movement between the screw member 322 and plunger 337.

The flange 349 supports one end of a return spring which acts to bias the flange 349 towards the end wall 315, the other end of the return spring acting against an anti-rotation plate 353 held in the cylinder bore 314 by a circlip or snap ring. The anti-rotation plate 353 has a tab 354 engaged with a recess 355 in the wall of the cylinder bore 314 and a radially inwardly directed finger engaged with one of the slots 334, rotation of the screw member 322 relative to the body 313 is thereby prevented. The cylindrical body portion 343 has at one end a receptacle in it to accept the pushrod 363 of a mechanical actuator and a number of gear teeth 372 around its circumference for engagement with corresponding gear teeth 371 on an adjuster shaft 370. Rotation of the adjuster shaft 370 will cause the plunger 337 to be rotated relative to the sleeve 336.

The sleeve 336 is prevented from rotation by a number of dog teeth 365 which are arranged to engage the slots 334 in the screw member.

The plunger 337 and the sleeve 336 provide a means of altering the amount of free travel available before adjustment commences.

Upon fluid pressure operation, piston 316 moves away from the end wall 315. The nut member 323 and screw member 322 move with the piston 316, head 332 of screw member 322 moving away from sleeve 336, until the locking pin 321 engages the wall of groove 342 adjacent the end of the plunger 337. Upon further movement of piston 316, face 324 of the nut member 323 is moved away from face 325 of piston 316 and, under the influence of spring 326 the nut member 323 rotates with respect to screw member 322, thereby extending the adjustable abutment means and effecting the required adjustment. Upon release of fluid pressure the piston 316 is able to move back, upon roll back of the piston seal, until the head 332 of screw member 322 once again abuts sleeve 336.

To set the free movement, the clearance between the locking pin 321 and the wall of groove 343 is adjusted by rotating plunger 337 relative to sleeve 336, by means of adjuster shaft 370. This moves screw member 322 axially with rspect to the plunger 337 and thus the locking pin 321 with respect to groove 342, until the required clearance is achieved.

Upon manual actuation, plunger 337 is moved towards piston 316 by means of mechanical actuator 364. This movement is transmitted through sleeve 336, screw member 322 and nut member 323 to piston 316. As faces 324 and 325 remain in engagement during this process, there is no relative rotation of the screw and nut members 322, 323 and no adjustment of the adjustable abutment means.

In this embodiment there may also be some axial clearance between the threads of screw member 322 and nut member 323. This clearance will effect the free travel in the system, but will be taken into account by the setting means.

## Claims

1. An actuator for a brake by means of which at least one friction member (11A, 11B) may be moved into engagement with a rotatable element (12), the actuator including an actuator body (13; 113; 313) defining a cylinder bore (14; 114; 314), an end wall (15; 115; 315) closing one end of the cylinder bore (14; 114; 314) and an actuator member (16; 116; 316) slidably sealed within the cylinder bore (14; 114; 314) thereby closing the other end to define a fluid tight working chamber (18) therebetween, an inlet port (17) being provided to said working chamber (18) by which fluid under pressure may be introduced into the working chamber (18) to move the actuator member (16; 116; 316) away from the end wall (15; 115; 315) to apply the brake; an adjuster mechanism (20; 120; 320) including an adjustable abutment means (22, 23; 122, 123; 322, 323) acting between the actuator member (16; 116; 316) and the end wall (15; 115; 315) to limit return movement of

the actuator member (l6; ll6; 3l6), said adjuster mechanism (20; l20; 320) also including free travel means operative to allow a limited free travel of the actuator member (l6; ll6; 3l6) before adjustment of the position of the abutment means (22, 23; l22, l23; 322, 323) commences to compensate for wear of the or each friction member (llA, llB); characterised in that adjustable setting means (35; l35; 335), operable after final assembly of the actuator, is provided to set said limited free travel of the actuator member (l6; ll6; 3l6) to a predetermined value, so that tolerance variations in the various components of the adjuster mechanism may be accomodated.

2. An actuator according to Claim 1 characterised in that the adjustable abutment means (22, 23; l22, l23; 322, 323) include an extendable strut having two engaging screw threaded adjuster parts (22, 23; l22, l23; 322, 323), one part ( 22; l23; 322) associated with the actuator body (l3; ll3; 3l3) and the other part (23; l22; 323) associated with the actuator member (l6; ll6; 3l6) such that movement of the actuator member (l6; ll6; 3l6) upon introduction of fluid into the working chamber (l8) will cause relative movement of the adjuster parts (22, 23; l22, l23; 322, 323); clutch means (24, 25; l24, l25; 324, 325) being provided between one of the adjuster parts (23; l23; 323) and the associated component (l6; ll3; 3l6) of the actuator, so that movement of the actuator member (l6; ll6; 3l6) beyond a predetermined limit upon introduction of fluid into the working chamber, will cause the clutch means (24, 25; l24; 324, 325) to disengage and one adjuster part (23; l23; 323) to rotate relative to the other adjuster part (22; l22; 322) to extend the strut, relative rotation of the adjuster parts (22, 23; l22, l23; 322, 323) being prevented by the clutch means (24, 25; l24, l25; 324, 325) on return movement of the adjuster member (l6; ll6; 3l6).

3. An actuator according to Claim 2 characterised in that the threads of the adjuster parts (22, 23; l22, l23; 322, 323) have a clearance therebetween such that the adjuster parts (22, 23; l22, l23; 322, 323) are free to travel relative to one another without disengagement of the clutch means (24, 25; l24, l25; 324, 325) up to said predetermined limit.

4. An actuator according to Claim 2 or 3 characterised in that the adjustable setting means (35; l35; 335) includes screw means (36, 37; l36, l37; 336, 337) accessible from outside the actuator body (l3; ll3; 3l3) by means of which the limited free travel of the actuator member (l6; ll6; 3l6) may be altered.

5. An actuator according to any one of Claims 2 to 4 characterised in that the actuator member (l6; ll6; 3l6) may be moved to apply the brake by mechanical means (36, 46; l64, l63, l37, l36; 364, 363, 337, 336), movement of said mechanical means (36, 46; l64, l63, l37, l36; 364, 363, 337, 336) to actuate the brake being transmitted through the adjuster mechanism (20, l20, 320) to move the actuator member (l6; ll6; 3l6) away from the end wall (l5; ll5; 3l5).

6. An actuator according to Claim 5 characterised in that the mechanical means (36, 46) rotates one of said parts (22) relative to the other part (23) to extend the strut and move the actuator member (l6) away from the end wall (l5).

7. An actuator according to Claim 6 characterised in that the mechanical means (36, 46) includes a sleeve member (36) which is mounted coaxially of the adjuster parts (22, 23) through the end wall (l5) of the actuator body (l3), said sleeve member (36) being rotatable with respect to the end wall (l5), said sleeve member (36) being connected to one of the adjuster parts (22) in an manner which will transmit rotational movement therebetween but will permit limited relative axial movement, means (46) engaging the sleeve member (36) externally of the actuator body (l3) by which the sleeve member (36) may be rotated to apply the brake mechanically, said sleeve member (36) having a threaded bore which is engaged by a correspondingly threaded plunger (37), said plunger (37) at one end abutting the end face (38) of the adjuster part (22) connected to the sleeve member (36) and at the other end being provided with a drive formation (39) by means of which it may be rotated by suitable means from the outer end of the sleeve member (36), thereby moving the plunger (37) and adjuster part (22) abutted thereby axially relative to the sleeve member (36) to adjust the limited free travel of the adjuster member (l6).

8. An actuator according to Claim 7 characterised in that an axially extending formation (32) on one of the adjuster parts(22) engages a corresponding axially extending formation (40) on the sleeve member (36) for transmission of rotational movement, the interengaging portions of the formations (34 and 40) being provided with circumferential grooves (4l, 42) which are maintained in axial alignment by a retaining member (44) which engages in the grooves (4l, 42), an axial clearance being provided between the retaining member (44) and the grooves (4l, 42) in one or both formations (34, 40) to permit limited relative axial movement of the sleeve member (36) and adjuster part (22).

9. An actuator according to Claim 5 characterised in that the mechanical means (l64, l63, l37, l36; 364, 363, 337, 336) applies an axial thrust to one of the adjuster parts (l23; 322), this axial thrust being transmitted via the other adjuster part (l22; 323), while it is prevented from rotating relative to said other adjuster part (l23; 322) by said clutch means (l24, l25; 324, 325), to the actuator member (ll6; 3l6) to force the actuator member (ll6; 3l6) away from the end wall (ll5; 3l5) and apply the brake.

l0. An actuator according to Claim 9 characterised in that the mechanical means (l64, l63, l37, l36; 364, 363, 337, 336) comprises a plunger (l37; 337) mounted coaxially of the adjuster parts (l22, l23; 322, 323) which is mounted through the end wall (ll5; 3l5) of the actuator body (ll3; 3l3) in a manner which will permit axial movement thereof to apply the brake mechanically, the end of the plunger (l37; 337) adjacent the adjuster parts (l22, l23; 322, 323) having a threaded portion (l59; 340) upon which is mounted a correspondingly threaded sleeve (l36; 336) for abutment of one end of the adjuster part (l23; 322), means (l45, l52, l54; 334, 365, 353) being provided to prevent rotation of said sleeve (l36; 336) and means (l6l; 370) accessible from outside the actuator body (ll3, 3l3) for rotation of the plunger (l37; 337), whereby rotation of the plunger (l37; 337) will

move the sleeve (l36, 336) axially of the plunger (l37; 337) to adjust the effective length of the plunger (l37; 337) and alter the limited free travel of the actuator member (ll6, 3l6).

ll. An actuator according to Claim l0 characterised in that the plunger (337) engages a formation in one of the adjuster parts (322), retaining means (342, 353) being provided to locate the adjuster part (322) with respect to the plunger (337) with limited axial movement therebetween, the sleeve (336) being adjustable axially against the end of the adjuster part (322) to alter the limited axial movement between the plunger (337) and adjuster part (322).

l2. An actuator according to Claim l0 or ll characterised in that a star wheel (l6l) is provided on the outer end of the plunger (l37) by means of which it may be rotated, detent means (l62) being provided for engagement of the star wheel (l6l) once adjustment of the limited free travel of the actuator member (ll6) has been effected.

l3. An actuator according to Claim l0 or ll characterised in that an adjuster shaft (270; 370) having a gear formation (27l; 37l) which engages a corresponding gear formation (272; 373) on the plunger (237; 337) is provided with a drive formation (273; 373) which is accessible from outside the actuator body (ll3; 3l3), so that the adjuster shaft (270; 370) may be rotated by suitable means to rotate the plunger (237; 337) and effect alteration of the limited free travel of the actuator member (ll6; 3l6).

## Patentansprüche

1. Betätigungsvorrichtung für eine Bremse, mittels der mindestens ein Reibungsteil (11A, 11B) in Eingriff mit einem drehbaren Element (12) bewegt werden kann, wobei die Betätigungsvorrichtung folgendes aufweist: ein Betätigungsvorrichtungsgehäuse (13; 113; 313), das eine Zylinderbohrung (14; 114; 314) bildet, eine Endwand (15; 115; 315), die ein Ende der Zylinderbohrung (14; 114; 314) verschließt, und ein Betätigungsteil (16; 116; 316), das verschiebbar in die Zylinderbohrung (14; 114; 314) eingeschlossen ist, um dadurch das andere Ende zu verschließen, um eine fluiddichte Arbeitskammer (18) dazwischen zu bilden, wobei eine Einlaßöffnung (17) zu der Arbeitskammer (18) vorgesehen ist, durch welche unter Druck stehendes Fluid in die Arbeitskammer (18) eingeführt werden kann, um das Betätigungsteil (16; 116; 316) von der Endwand (15; 115; 315) wegzubewegen, um die Bremse anzulegen; einen Nachstellmechanismus (20; 120; 320), der eine verstellbare Anschlageinrichtung (22, 23; 122, 123; 322, 323) aufweist, die zwischen dem Betätigungsteil (16; 116; 316) und der Endwand (15; 115; 315) wirkt, um die Rückkehrbewegung des Betätigungsteiles (16; 116; 316) zu begrenzen, wobei der Nachstellmechanismus (20; 120; 320) eine freie Hubeinrichtung aufweist, die wirksam ist, um einen begrenzten freien Hub des Betätigungsteiles (16; 116; 316) zu gestatten, bevor die Nachstellung der Lage der Anschlageinrichtung (22, 23; 122, 123; 322, 323) beginnt, um die Abnutzung des oder eines jeden Reibungsteiles (11A ,11B) auszugleichen; dadurch gekennzeichnet, daß einstellbare Stellmittel (35; 135; 335), die nach dem endgültigen Zusammenbau der Betätigungsvorrichtung wirksam machbar sind, vorgesehen sind, um den begrenzten freien Hub des Betätigungsteiles (16; 116; 316) auf einen vorbestimmten Wert einzustellen, so daß Toleranzabweichungen in den verschiedenen Bauteilen des Nachstellmechanismus aufgehoben werden können.

2. Betätigungsvorrichtung nach Anspruch 1, dadurch gekennzeichnet, daß die einstellbare Anschlageinrichtung (22, 23; 122, 123; 322, 323) eine spreizbare Strebe aufweist, die zwei ineinandergreifende, mit einem Schraubengewinde versehene Nachstellteile (22, 23; 122, 123; 322; 323) hat, von denen ein Teil (22; 123; 322) dem Betätigungsvorrichtungsgehäuse (13; 113; 313) zugeordnet ist und der andere Teil (23; 122; 323) dem Betätigungsteil (16; 116; 316) zugeordnet ist, derart, dass die Bewegung des Betätigungsteiles (16; 116; 316) bei der Einführung von Fluid in die Arbeitskammer (18) eine Relativbewegung der Nachstellteile (22, 23; 122, 123; 322, 323) hervorrufen wird; wobei eine Kupplungseinrichtung (24, 25; 124; 125; 324, 325) zwischen einem der Nachstellteile (23; 123; 323) und dem zugeordneten Bauteil (16; 116; 316) der Betätigungsvorrichtung vorgesehen ist, so daß eine Bewegung des Betätigungsteiles (16; 116; 316) über einen vorbestimmten Grenzwert hinaus bei der Einführung von Fluid in die Arbeitskammer bewirken wird, daß sich die Kupplungseinrichtung (24, 25; 124, 125; 324, 325) löst und sich ein Nachstellteil (23; 123; 323) relativ zu dem anderen Nachstellteil (22; 122; 322) dreht, um die Strebe zu spreizen, wobei eine Relativdrehung der Nachstellteile (22, 23; 122, 123; 322, 323) durch die Kupplungseinrichtung (24, 25; 124, 125; 324, 325) bei der Rückkehrbewegung des Betätigungsteiles (16; 116; 316) verhindert wird.

3. Betätigungsvorrichtung nach Anspruch 2, dadurch gekennzeichnet, daß die Windungen der Nachstellteile (22, 23; 122, 123; 322; 323) ein Spiel dazwischen haben, derart, daß die Nachstellteile (22, 23; 122, 123; 322, 323) frei sind, sich relativ zueinander ohne Lösen der Kupplungseinrichtung (24, 25; 124, 125; 324, 325) bis zu dem vorbestimmten Grenzwert zu bewegen.

4. Betätigungsvorrichtung nach Anspruch 2 oder 3, dadurch gekennzeichnet, daß die einstellbaren Stellmittel (35; 135; 335) eine Schraubeinrichtung (36, 37; 136, 137; 336, 337) aufweisen, die von außerhalb des Betätigungsvorrichtungsgehäuses (13; 113; 313) zugänglich ist und durch welche der begrenzte freie Hub des Betätigungsteiles (16; 116; 316) verändert werden kann.

5. Betätigungsvorrichtung nach einem der Ansprüche 2 bis 4, dadurch gekennzeichnet, daß das Betätigungsteil (16; 116; 316) bewegt werden kann, um die Bremse durch mechanische Mittel (36, 46; 164, 163, 137, 136; 364, 363, 337, 336) anzulegen, wobei die Bewegung der mechanischen Mittel (36, 46; 164, 163, 137, 136; 364, 363, 337, 336) zum Betätigen der Bremse über den Nachstellmechanismus (20, 120, 320) übertragen wird, um das Betätigungsteil (16; 116; 316) von der Endwand (15; 115; 315) wegzubewegen.

6. Betätigungsvorrichtung nach Anspruch 5, dadurch gekennzeichnet, daß die mechanischen Mittel (36, 46) einen der Teile (22) relativ zu dem anderen Teil (23) drehen, um die Strebe zu spreizen und das Betätigungsteil (16) von der Endwand (15) wegzubewegen.

7. Betätigungsvorrichtung nach Anspruch 6, dadurch gekennzeichnet, daß die mechanischen Mittel (36, 46) ein Hülsenteil (36) aufweisen, das koaxial zu den Nachstellteilen (22, 23) durch die Endwand (15) des Betätigungsvorrichtungsgehäuses (13) angeordnet ist, wobei das Hülsenteil (36) drehbar bezüglich der Endwand (15) ist, wobei das Hülsenteil (36) mit einem der Nachstellteilen (22) auf eine Art und Weise verbunden ist, die eine Drehbewegung zwischen ihnen überträgt, aber eine begrenzte relative Axialbewegung zuläßt, eine Einrichtung (46), die an dem Hülsenteil (36) außerhalb des Betätigungsvorrichtungsgehäuses (13) angreift, durch welche das Hülsenteil (36) gedreht werden kann, um die Bremse mechanisch anzulegen, wobei das Hülsenteil (36) eine Gewindebohrung hat, in die ein mit einem entsprechenden Gewinde versehener Tauchkolben (37) eingreift, wobei der Tauchkolben (37) an einem Ende die Endfläche (38) des Nachstellteiles (22), das mit dem Hülsenteil (36) verbunden ist, beaufschlagt und an dem anderen Ende mit einem Antriebsgebilde (39) versehen ist, mittels dem er durch geeignete Mittel von dem äußeren Ende des Hülsenteiles (36) gedreht werden kann, um dadurch den Tauchkolben (37) und das dadurch beaufschlagte Nachstellteil (22) axial relativ zu dem Hülsenteil (36) zu bewegen, um den begrenzten freien Hub des Betätigungsteiles (16) einzustellen.

8. Betätigungsvorrichtung nach Anspruch 7, dadurch gekennzeichnet, daß ein axial sich erstreckendes Gebilde (32) an einem der Nachstellteile (22) an einem entsprechenden axial sich erstreckenden Gebilde (40) an dem Hülsenteil (36) für die Übertragung der Drehbewegung angreift, wobei die ineinandergreifenden Teile der Gebilde (34 und 40) mit in Umfangsrichtung verlaufenden Rillen (41, 42) versehen sind, die in axialer Ausrichtung durch ein Halteteil (44) gehalten werden, das in die Rillen (41, 42) eingreift, wobei ein axiales Spiel zwischen dem Halteteil (44) und den Rillen (41, 42) in einem oder beiden Gebilden (34, 40) vorgesehen ist, um die begrenzte relative Axialbewegung des Hülsenteils (36) und des Nachstellteiles (22) zu gestatten.

9. Betätigungsvorrichtung nach Anspruch 5, dadurch gekennzeichnet, daß die mechanischen Mittel (164, 163, 137, 136; 364, 363, 337, 336) eine axiale Schubkraft auf eines der Nachstellteile (123; 322) aufbringen, wobei diese Schubkraft über das andere Nachstellteil (122; 322) auf das Betätigungsteil (116; 316) übertragen wird, während es durch die Kupplungseinrichtung (124, 125; 324, 325) daran gehindert wird, sich relativ zu dem einen Nachstellteil (123; 322) zu drehen, um das Betätigungsteil (116; 316) weg von der Endwand (115; 315) zu bewegen und die Bremse anzulegen.

10. Betätigungsvorrichtung nach Anspruch 9, dadurch gekennzeichnet, daß die mechanischen Mittel (164, 163, 137, 136; 364, 363, 337, 336) einen koaxial zu den Nachstellteilen (122, 123; 322, 323) angeordneten Tauchkolben (137; 337) aufweisen, der durch die Endwand (115; 315) des Betätigungsvorrichtungsgehäuses (113; 313) auf eine Art und Weise angeordnet ist, die eine Axialbewegung von ihm gestattet, um die Bremse mechanisch anzulegen, wobei das an die Nachstellteile (122, 123; 322, 323) angrenzende Ende des Tauchkolbens (137; 337) einen Gewindeteil (159; 340) hat, auf dem eine mit einem entsprechenden Gewinde versehene Hülse (136; 336) zur Anlage an einem Ende des Nachstellteiles (123; 322) angeordnet ist, wobei eine Einrichtung (145, 152, 154; 334, 353) vorgesehen ist, um die Drehung der Hülse (136; 336) zu verhindern, und eine Einrichtung (161; 370), die von außerhalb des Betätigungsvorrichtungsgehäuses (113, 313) für die Drehung des Tauchkolbens (137; 337) zugänglich ist, wobei die Drehung des Tauchkolbens (137; 337) die Hülse (136, 336) axial zu dem Tauchkolben (137; 337) bewegt, um die effektive Länge des Tauchkolbens (137; 337) einzustellen und den begrenzten freien Hub des Betätigungsteiles (116, 316) zu ändern.

11. Betätigungsvorrichtung nach Anspruch 10, dadurch gekennzeichnet, daß der Tauchkolben (337) an einem Gebilde in einem der Nachstellteile (332) angreift, wobei eine Halteeinrichtung (342, 353) vorgesehen ist, um das Nachstellteil (322) bezüglich des Tauchkolbens (337) mit einer begrenzten Axialbewegung dazwischen festzulegen, wobei die Hülse (336) axial gegen das Ende des Nachstellteiles (322) einstellbar ist, um die begrenzte Axialbewegung zwischen dem Tauchkolben (337) und dem Nachstellteil (322) zu ändern.

12. Betätigungsvorrichtung nach Anspruch 10 oder 11, dadurch gekennzeichnet, daß ein Sternrad (161) an dem äußeren Ende des Tauchkolbens (137) vorgesehen ist, mittels dem er gedreht werden kann, wobei eine Sperreinrichtung (162) zum Eingriff in das Sternrad (161), nachdem die Einstellung des begrenzten freien Hubes des Betätigungsteiles (116) bewirkt wurde, vorgesehen ist.

13. Betätigungsvorrichtung nach Anspruch 10 oder 11, dadurch gekennzeichnet, daß eine Nachstellwelle (270; 370), die eine Verzahnung (271, 371) hat, die in eine entsprechende Verzahnung (272; 372) an dem Tauchkolben (237; 373) eingreift, mit einem Antriebsgebilde (273; 373) versehen ist, das von außerhalb des Betätigungsvorrichtungsgehäuses (113; 313) zugänglich ist, so daß die Nachstellwelle (270; 370) durch geeignete Mittel gedreht werden kann, um den Kolben (273; 373) zu drehen und eine Änderung des begrenzten freien Hubes des Betätigungsteiles (116; 316) zu bewirken.

**Revendications**

1. Actionneur pour frein, à l'aide duquel au moins un organe de friction (11A, 11B) peut être mis en contact avec un élément rotatif (12), l'actionneur comprenant un corps d'actionneur (13; 113; 313) qui définit un alésage de cylindre (14; 114; 314), une paroi d'extrémité (15; 115; 315) qui ferme une première extrémité de l'alésage de cylindre (14; 114; 314), un organe d'actionneur (16; 116; 316) qui coulisse à joint étanche dans l'alésage de cylindre (14; 114; 314) afin de fermer l'autre extrémité pour définir une chambre de travail (18) étanche au fluide entre les extrémités, un orifice d'entrée (17) étant prévu pour donner dans cette chambre de travail (18) afin d'introduire du fluide sous pression dans la chambre de travail (18) pour mettre l'organe d'actionneur (16; 116; 316) en mouvement dans le sens qui l'éloigne de la paroi d'extrémité (15; 115; 315) pour serrer le frein; un mécanisme de rattrapage (20, 120; 320) comprenant un moyen de butée ajustable (22, 23; 122, 123; 322, 323), qui agit entre l'organe d'actionneur (16; 116; 316) et la paroi d'extrémité (15; 115; 315) pour limiter le mouvement de retour de l'organe d'actionneur (16; 116; 316), ce mécanisme de rattrapage (20; 120; 320) comprenant aussi un moyen à course libre qui a pour effet de permettre une course libre limitée de l'organe d'actionneur (16; 116; 316) avant qu'il ne commence à se produire un ajustement de rattrapage de la position du moyen de butée (22, 23; 122, 123; 322, 323) pour compenser l'usure de l'organe de friction ou de chaque organe de friction (11A, 11B); actionneur caractérisé en ce qu'un moyen de réglage ajustable (35; 135; 335) qui peut être manœuvré après l'assemblage final de l'actionneur, est prévu pour régler cette course limitée de l'organe d'actionneur (16; 116; 316) sur une valeur prédéterminée, de manière à absorber les écarts de tolérances sur les différents composants du mécanisme de rattrapage.

2. Actionneur selon la revendication 1, caractérisé en ce que le moyen de butée ajustable (22, 23; 122, 123; 322, 323) comprend une entretoise extensible possédant deux parties de dispositif de rattrapage filetées vissées l'une dans l'autre (22, 23; 122, 123; 322, 323), une partie (22; 123; 322) étant associée au corps (13; 113; 313) de l'actionneur et l'autre (23; 122; 323) étant associée à l'organe d'actionneur (16; 116; 316) de telle manière que le mouvement que l'organe d'actionneur (16; 116; 316) décrit en réponse à l'introduction de fluide dans la chambre de travail (18) un déplacement relatif des parties (22, 23; 122, 123; 322, 323) du dispositif de rattrapage, un moyen d'embrayage (24, 25; 124, 125; 324, 325) étant prévu entre l'une des parties du dispositif de rattrapage (23; 123; 323) et le composant correspondant (16; 113; 316) de l'actionneur, de telle manière que le mouvement que l'organe d'actionneur (16; 116; 316) décrit au-delà d'une limite déterminée en réponse à l'introduction de fluide dans la chambre de travail conduise le moyen d'embrayage (24, 25; 124, 125; 324, 325) à se débrayer et une partie du dispositif de rattrapage (23; 123; 323) à tourner par rapport à l'autre partie du dispositif de rattrapage (22; 122; 322) pour mettre l'entretoise en extension, la rotation relative des parties (22, 23; 122, 123; 322, 323) étant empêchée par le moyen d'embrayage (24, 25: 124, 125; 324, 325) lors du mouvement de retour de l'organe d'actionneur (16, 116; 316).

3. Actionneur selon la revendication 2, caractérisé en ce que les filetages des parties du dispositif de rattrapage (22, 122, 123; 322, 323) ont entre eux un jeu tel que les parties du dispositif de rattrapage (22, 23; 122, 123; 322, 323) soient libres de se déplacer l'un par rapport à l'autre sans débrayer le moyen d'embrayage (24, 25; 124, 125; 324, 325) jusqu'à cette limite prédéterminée.

4. Actionneur selon la revendication 2 ou 3, caractérisé en ce que les moyens de réglage ajustable (35; 135; 335) comprend un moyen du type vis (36, 37; 136, 137; 336, 337) accessible de l'extérieur du corps (13; 113; 313) de l'actionneur, à l'aide duquel on peut modifier la course libre limitée de l'organe d'actionneur (16; 116; 316).

5. Actionneur selon l'une quelconque des revendications 2 à 4, caractérisé en ce que l'organe d'actionneur (16, 116; 316) peut être mis en mouvement pour serrer le frein par un moyen mécanique (36, 46; 164, 163, 137, 136; 364, 363, 337, 336), le mouvement de ce moyen mécanique (36, 46; 164, 163, 137, 136; 364, 363, 337, 336) qui actionne le frein étant transmis à travers le mécanisme de rattrapage (20, 120, 320) pour mettre l'organe d'actionneur (16; 116; 316) en mouvement dans le sens qui l'éloigne de la paroi d'extrémité (15; 115; 315).

6. Actionneur selon la revendication 5, caractérisé en ce que le moyen mécanique (36, 46) fait tourner l'une de ces parties (22) par rapport à l'autre partie (23) pour mettre l'entretoise en extension et mettre l'organe d'actionneur (16) en mouvement dans le sens qui l'éloigne de la paroi d'extrémité (15).

7. Actionneur selon la revendication 6, caractérisé en ce que le moyen mécanique (36, 46) comprend un manchon (36) qui est monté coaxialement aux parties (22, 23) du dispositif de rattrapage, à travers la paroi d'extrémité (15) du corps (13) de l'actionneur, ce manchon (36) pouvant tourner par rapport à cette paroi d'extrémité (15), ce manchon (36) étant relié à l'une des parties (22) du dispositif de rattrapage d'une façon qui transmettra le mouvement de rotation entre ces éléments mais qui permettra un mouvement axial relatif limité, un moyen (46) qui attaque le manchon (36) à l'extérieur du corps (13) de l'actionneur, à l'aide duquel on peut faire tourner le manchon (36) pour serrer le frein mécaniquement, ce manchon (36) présentant un perçage fileté qui est attaqué par un plongeur fileté de façon correspondante (37), ce plongeur (37) butant par une extrémité contre le face d'extrémité (38) de la partie (22) du dispositif de rattrapage relié au manchon (36), et étant muni, à l'autre extrémité, d'une formation d'entraînement (39) à l'aide de laquelle on peut le faire tourner grâce à un moyen approprié, en agissant à l'extrémité extérieure du manchon (36), pour déplacer ainsi le plongeur (37) et la partie (22) du dispositif de rattrapage qui est en butée contre ce plongeur, dans la direction axiale par rapport au manchon (36) pour ajuster la course libre limitée de l'organe d'actionneur (16).

8. Actionneur selon la revendication 7, caractérisé en ce qu'une formation (32) s'étendant axialement, prévue sur l'une des parties (22) du dispositif de rattrapage attaque une formation correspondante (40) s'étendant axialement prévue sur le manchon (36) pour transmettre le mouvement de rotation, les portions des formations (34 et 40) qui sont en prise entre elles étant munies de gorges circonférentielles (41, 42) qui sont maintenues dans un même alignement axial par un organe de retenue (44) qui s'engage dans les gorges (41, 42), un jeu axial étant prévu entre l'organe de retenue (44) et les gorges (41, 42) de l'une ou de chacune des formations (34, 40) pour permettre un mouvement axial relatif limité du manchon (36) et de la partie (22) du dispositif de rattrapage.

9. Actionneur selon la revendication 5, caractérisé en ce que le moyen mécanique (164, 163, 137, 136; 364, 363, 337, 336) applique une poussée axiale à l'une des parties (123; 322) du dispositif de rattrapage, cette poussée axiale étant transmise, par l'intermédiaire de l'autre partie (122; 323) du dispositif de rattrapage cependant qu'elle est empêchée de tourner par rapport à cette autre partie (123; 322) du dispositif de rattrapage par ce moyen d'embrayage (124, 125; 324, 325), à l'organe d'actionneur (116; 316) pour éloigner l'organe d'actionneur (116; 316) à force de la paroi d'extrémité (115; 315) et pour serrer le frein.

10. Actionneur selon la revendication 9, caractérisé en ce que le moyen mécanique (164, 163, 137, 136, 364, 363, 337, 336) comprend un plongeur (137; 337) monté coaxialement aux parties (122, 123; 322, 323) du dispositif de rattrapage, qui est monté à travers la paroi d'extrémité (115; 315) du corps (113; 313) de l'actionneur d'une manière qui permet à ce plongeur de décrire un mouvement axial pour serrer le frein mécaniquement, l'extrémité du plongeur (137; 337) qui est contiguë aux parties (122, 123; 322, 323) du dispositif de rattrapage possédant une portion filetée (159; 340) sur laquelle est monté un manchon (136; 336) fileté de façon correspondante, destiné à buter contre une première extrémité de la partie (123; 322) du dispositif de rattrapage, un moyen (145, 152, 154; 334, 365, 353) étant prévu pour empêcher la rotation de ce manchon (136; 336) et un moyen (161; 370) accessible de l'extérieur du corps (113, 313) de l'actionneur pour faire tourner le plongeur (137; 337), de sorte que la rotation du plongeur (137; 337) déplace le manchon (136; 336) dans la direction axiale du plongeur (137; 337) pour ajuster la longueur effective du plongeur (137; 337) et modifier la course libre limitée de l'organe d'actionnement (116, 316).

11. Actionneur selon la revcendication 10, caractérisé en ce que le plongeur (337) attaque une formation ménagée dans l'une des parties (322) du dispositif de rattrapage, un moyen de retenue (342, 353) étant prévu pour fixer la position de la partie (322) du dispositif de rattrapage par rapport au plongeur (337) avec un mouvement axial limité entre ces éléments, le manchon (336) étant ajustable dans la direction axiale vers l'extrémité de la partie (322) du dispositif de rattrapage pour modifier le mouvement axial limité entre le plongeur (337) et la partie (322) du dispositif de rattrapage.

12. Actionneur selon la revendication 10 ou 11, caractérisé en ce qu'une roue étoile (161) est prévue sur l'extrémité du plongeur (137) à l'aide de laquelle on peut faire tourner ce plongeur, un moyen d'encliquetage (162) étant prévu pour coopérer avec la roue étoile (161) après que l'ajustement de la course libre limitée de l'organe d'actionneur (116) à été effectuée.

13. Actionneur selon la revendication 10 ou 11, caractérisé en ce qu'un arbre de dispositif de rattrapage (270; 370) portant une formation d'engrenage (271; 371) qui coopère avec une formation d'engrenage correspondante (272; 373) prévue sur le plongeur (237; 337) est muni d'une formation d'entraînement (273; 373) qui est accessible de l'extérieur du corps (113; 313) du plongeur de telle manière que l'arbre du dispositif de rattrapage (270; 370) puisse être tourné à l'aide d'un moyen approprié pour faire tourner le plongeur (237; 337) et déterminer la modification de la course libre limitée de l'organe d'actionneur (116; 316).

EP 0 210 749 B1

FIG. 1.

FIG. 3.

FIG. 2.

FIG. 5

FIG. 4

323 320 314 322 313 332 334 353 321 335 349 315 337 343 372

363 364

316

324

330

331

328

329

325 326 327 342 365 341 354 340 355 336 371 370 373

FIG. 8.

EP 0 210 749 B1